**Europäisches Patentamt**

**European Patent Office**

**Office européen des brevets**

(19)

(11) Veröffentlichungsnummer : **0 066 237**
**B1**

(12) **EUROPÄISCHE PATENTSCHRIFT**

(45) Veröffentlichungstag der Patentschrift :
**11.12.85**

(21) Anmeldenummer : **82104553.1**

(22) Anmeldetag : **25.05.82**

(51) Int. Cl.⁴ : **A 01 D 46/08,** A 01 D 45/00,
A 01 D 45/02

(54) **Erntekopf für Erntemaschinen zum Ernten von in Reihen variablen Abstands stehendem Erntegut.**

(30) Priorität : **26.05.81 US 266875**

(43) Veröffentlichungstag der Anmeldung :
**08.12.82 Patentblatt 82/49**

(45) Bekanntmachung des Hinweises auf die Patenterteilung : **11.12.85 Patentblatt 85/50**

(84) Benannte Vertragsstaaten :
**DE FR GB IT**

(56) Entgegenhaltungen :
**AT-B-   257 228**
**DE-A- 2 115 193**
**US-A- 3 609 948**
**US-A- 3 995 412**

(73) Patentinhaber : **DEERE & COMPANY**
**1 John Deere Road**
**Moline Illinois 61265 (US)**

(72) Erfinder : **Schlueter, Francis Edward**
**6666 Northwest Fifth Street**
**Des Moines Iowa 50313 (US)**
Erfinder : **Kent, Brian Elwood**
**8932 New York Avenue**
**Des Moines Iowa 50313 (US)**

(74) Vertreter : **Fricke, Joachim, Dr. et al**
**Dr. R. Döring, Dr. J. Fricke, Patentanwälte Josephspitalstrasse 7**
**D-8000 München 2 (DE)**

EP 0 066 237 B1

## Beschreibung

Die Erfindung betrifft einen Erntekopf für Erntemaschinen zum Ernten von in Reihen unterschiedlichen Abstandes stehenden Erntegutes mit den Merkmalen des Oberbegriffs des Anspruchs 1.

Ein Erntekopf dieser Art ist aus der US-A-3 609 948 bekannt. Bei diesem Erntekopf weist der Erntegutsammeltrog an seinem oberen und seinem unteren, quer zur Fahrtrichtung verlaufenden Rand winkelförmige Flansche auf, an denen jeweils zueinander parallele Träger befestigt sind, welche jeweils eine Reihe von quer zur Fahrtrichtung in Abständen angeordnete Öffnungen oder Löcher aufweisen, durch die in verschiedenen abgestuften Arbeitsstellungen die Führungs- und Feststellelemente in Form von Schraubbolzen greifen. Die Haltevorrichtung für die langgestreckte Reihenernteeinheit weist zwei im gegenseitigen Abstand angeordnete, parallele Seitenglieder auf, die oben und unten über Winkeleisen miteinander verbunden sind, welche auf den oberen und unteren Trägern aufliegen. An dem unteren Winkeleisen der Haltevorrichtung ist eine nach unten ragende Halterung befestigt, die an ihrem unteren Ende die horizontale Querachse für das untere Ende des Hubzylinders trägt. Zur seitlichen Verstellung der Haltevorrichtung mit der zugehörigen Reihenernteeinheit müssen am oberen Teil und am unteren Teil die Führungs- und Feststellelemente gelöst und herausgenommen und nach Erreichen der neuen Stellung neu eingesetzt und festgezogen werden. Dabei besteht die Gefahr, daß die Führungs- und Feststellelemente verlorengehen. Auch besteht die Gefahr, daß nach Herausnehmen der Führungs- und Feststellelemente die Haltevorrichtung ihre sichere Auflage auf den Trägern des Sammeltroges verliert. Außerdem ist eine seitliche Einstellung nur nach einem vorgegebenen, durch die Anbringung der Löcher in den Trägern bestimmte Muster möglich. Schließlich wird die Haltevorrichtung erheblichen Biegekräften ausgesetzt, da die Hubzylinder die von diesen aufgenommenen Kräfte in die Haltevorrichtung über das untere Ende der von der Haltevorrichtung nach unten ragenden Halterungen für die untere Querachse einleitet. Dadurch kann es zu Verkantungen und zu übermäßigen Beanspruchungen von Teilen der Anordnung kommen. Durch diese Art der Einleitung der Kräfte ergeben sich auch erhebliche zusätzliche Reibungskräfte zwischen dem unteren Teil der Haltevorrichtung und dem zugehörigen Träger, welche die seitliche Verschiebung und Ausrichtung der Haltevorrichtung beeinträchtigen.

Es ist Aufgabe der vorliegenden Erfindung, einen Erntekopf mit den Merkmalen des Oberbegriffs des Anspruchs 1 so weiterzubilden, daß auch bei Anbau einer größeren Anzahl von Reihenernteeinheiten eine genaue Ausrichtung jeder Reihenernteeinheit auf die Pflanzenreihe auf einfache, rasche und arbeitsmäßig erleichterte Weise ermöglicht wird.

Diese Aufgabe wird durch die Merkmale des Anspruchs 1 gelöst.

Aufgrund der neuen Anordnung läßt sich jede Reihenernteeinheit an beliebiger Stelle über die Gesamtbreite von Hauptrahmen und Verlängerungsrahmen verschieben und so genau auf die Pflanzengutreihen ausrichten, unabhängig davon, wie groß der Reihenabstand ist oder wie sehr die Reihenabstände variieren. Dies wird durch die stufenlose Seiteneinstellungsmöglichkeit jeder einzelnen Reihenernteeinheit gewährleistet. Das Einstellen wird auch wesentlich vereinfacht und erleichtert. Die Führungs- und Feststellelemente brauchen lediglich gelockert zu werden, wobei diese Führungs- und Feststellelemente nur dem oberen Teil der Haltevorrichtung zugeordnet sind. Die Führungs- und Feststellelemente sind somit nicht verlierbar, da sie nicht vollständig gelöst und abgenommen zu werden brauchen. Sie sorgen dabei gleichzeitig dafür, daß auch bei einer Verstellung die Haltevorrichtung sich niemals vollständig von den Trägern lösen kann. Vielmehr übernehmen die Führungs- und Feststellelemente neben ihrer Feststellfunktion auch eine Führungsfunktion während der seitlichen Ausrichtung. Auch die Herstellung vereinfacht sich, da in den Trägern nach ausgewähltem Muster verteilte Bohrungen nicht angebracht zu werden brauchen. Gleichzeitig entfällt damit auch die durch die Bohrung entstehende Schwächung der Träger selbst.

Durch die neue Anordnung wird somit nicht nur die Handhabung erleichtert, sondern neben einer genaueren Einstellemöglichkeit auch die Sicherheit während der Einstellung wesentlich vergrößert.

Durch die weiterbildenden Maßnahmen nach Anspruch 2 wird eine weitere Vereinfachung der Haltevorrichtung erreicht und gleichzeitig gewährleistet, daß die von den Hubzylindern aufgenommenen Kräfte in besonders günstiger Weise in den unteren Teil der Haltevorrichtung eingeleitet werden, ohne daß die Haltevorrichtung unter diesen Kräften verklemmt oder verspannt wird. Dadurch wird auch die Reibung für die seitliche Verstellung im unteren Teil der Haltevorrichtung wesentlich herabgesetzt und so das Ausrichten erleichtert. Erst durch die leichte Verschiebbarkeit auch des unteren Teils der Haltevorrichtung ist es überhaupt möglich diesen aus zwei voneinander unabhängigen Teilen zu bilden, wobei nur der obere Teil die Führungs- und Feststellelemente aufweist.

Der neue Erntekopf ist besonders geeignet für Erntemaschinen zum Ernten von Baumwolle.

Die Erfindung wird nachfolgend anhand schematischer Zeichnungen an zwei Ausführungsbeispielen näher erläutert.

Es zeigen :

Figur 1 in perspektivischer Ansicht schräg von vorne eine Erntemaschine mit einem Erntekopf gemäß der Erfindung zum Pflücken vom Baumwolle.

Figur 2 in Ansicht von vorne den Hauptrahmen.

Figur 3 eine Ansicht mit Blickrichtung in Richtung der Pfeile 3-3 der Figur 2.

Figur 4 im größeren Maßstabe eine Vorderansicht des Verlängerungsrahmens.

Figur 5 eine Ansicht mit Blickrichtung der Pfeile 5-5 in Figur 4.

Figur 6 in Draufsicht das Stirnblech eines Verlängerungsrahmens nach Fig. 4 oder 5.

Figur 7 den Verlängerungsrahmen mit eingebauter Verlängerung für die Förderschnecke.

Figur 8 in Seitenansicht eine Haltevorrichtung einer Reihenernteeinheit in einer ersten Ausführungsform.

Figur 9 im Ausschnitt und in Seitenansicht den unteren Teil einer Haltevorrichtung in einer zweiten Ausführungsform.

Figur 10 in Vorderansicht den oberen Teil der Haltevorrichtung nach Figur 9.

Figur 11 in perspektivischer Darstellung die Haltevorrichtung in der Ausführung nach Figur 8 und

Figur 12 und Figur 13 in schematischer Darstellung zwei verschiedene Einstellungen der Reihenernteeinheiten der Erntemaschine.

Nachfolgend ist das Ernten von Baumwolle nur als Beispiel für den Einsatz eines Erntekopfes nach der Erfindung angeführt.

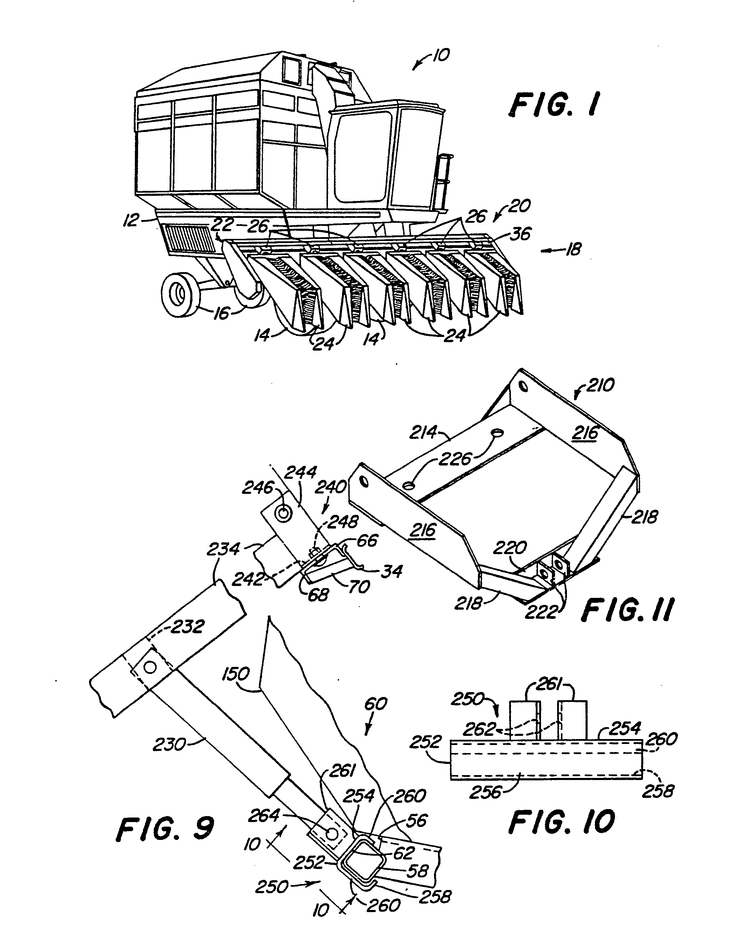

Die in Fig. 1 gezeigte, selbstfahrende Baumwollerntemaschine 10 weist ein Fahrgestell 12 mit vorderen Antriebsrädern 14 und rückwärtigen Lenkrädern 16 auf. Der Erntekopf 18 ist vor den Antriebsrädern 14 am Fahrgestell 12 abgestützt.

Der Erntekopf 18 weist einen quer zur Fahrtrichtung langgestreckten Hauptrahmen 20 und einen mit diesem verbindbaren Verlängerungsrahmen 22 auf. Auf diesen sind im dargestellten Beispiel vier Reihenernteeinheiten 24 abgestützt. Es können auch bis zu sechs Reihenernteeinheiten vorgesehen sein. Die Reihenernteeinheiten sind in üblicher Weise ausgebildet und weisen jeweils eine die Antriebskräfte einleitende Antriebseinrichtung 26 auf, welche einstellbar an dem Hauptrahmen 20 und dem Verlängerungsrahmen 22 angeordnet sind. Die Antriebseinrichtungen 26 werden von einem nicht dargestellten Hauptantrieb aus angetrieben, der auch über eine Antriebseinrichtung 32 die in dem Erntegutsammeltrog 60 angeordnete Förderschnecke 30 antreibt.

Der Hauptrahmen 20 besteht aus mehreren langgestreckten, in Fahrtrichtung und in der Höhe gegeneinander versetzten und zueinander parallelen Trägern 34, 36, 46 und 58, die als Hohlprofile ausgebildet sind. Die Träger sind durch in gegenseitigen Abständen angeordnete Verbindungsstreben 38, 40 bzw. 44 bzw. 48 starr miteinander verbunden, welche aus entsprechenden Profilen bestehen, wobei die unteren Verbindungsglieder 48 z. B. aus bei 54 abgeknickten Winkeleisen bestehen, deren oberer Schenkel mit 52 und deren vordere Kante mit 56 bezeichnet ist. Der vordere untere Träger 58 weist eine nach oben weisende Stützfläche 62 auf. An dem in mittlerer Höhe angeordneten Träger 34 sind zwei unter Bildung eines Längsschlitzes 72 in einer horizontalen Ebene angeordnete Trägerteile 66, 68 mittels in Abständen angeordneten Haltern 70 befestigt. Über die Halter sind auch schräg nach vorne und nach unten ragende Stützbleche 78 befestigt, deren oberes Ende 82 geschlitzt ist und deren unteres Ende 84 etwa in der Querschnittsmitte des Erntegutsammeltroges 60 eine Lageröffnung 86 für die Förderschnecke aufweist. Die Träger und die zugehörigen Verbindungsglieder können miteinander durch Knotenbleche 42, 50 aufgesteift sein.

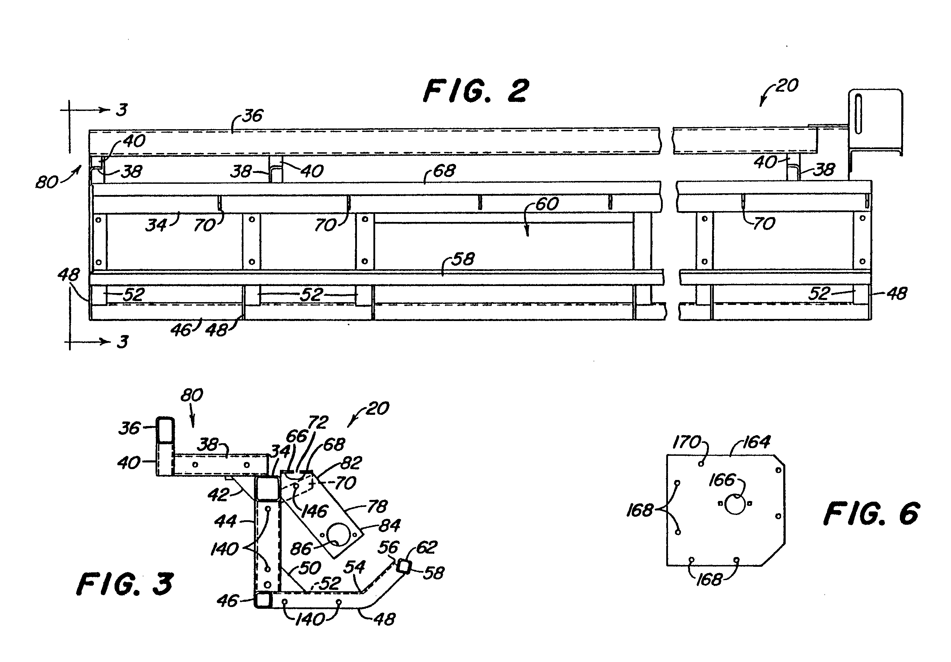

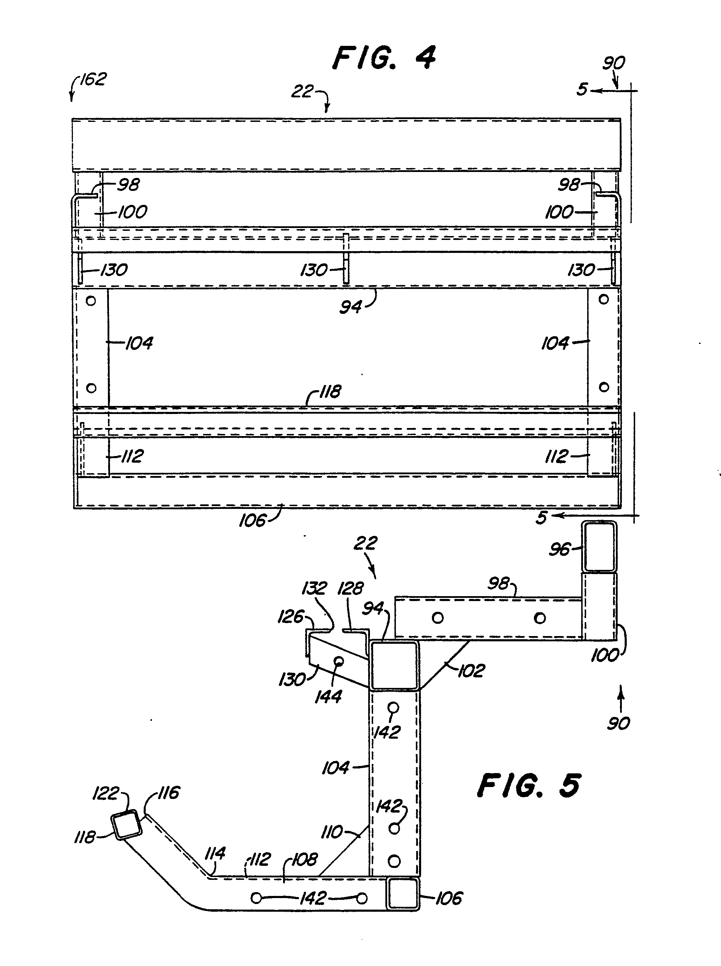

Der Verlängerungsrahmen ist entsprechend dem Hauptrahmen 20 ausgebildet, wie ein Vergleich der Fig. 2 mit der Fig. 4 und der Fig. 3 mit der Fig. 5 zeigt. Das Ende 90 des Verlängerungsrahmens 22 schließt an das Ende des Hauptrahmens 20 an. Das freiliegende Ende des Verlängerungsrahmens ist mit 162 bezeichnet. Der Verlängerungsrahmen 22 weist den Trägern des Hauptrahmens 20 entsprechende Träger 94, 96, 106 und 118 auf, die mit den Trägern des Hauptrahmens quer zur Fahrtrichtung in Fluchtung liegen. Die entsprechenden Träger starr miteinander verbindende Verbindungsglieder sind mit 98, 100, 104 und 108 bezeichnet, wobei die Glieder 108 als Winkelglieder ausgebildet sind, bei 114 abgeknickt sind und obere Schenkel 112 und vordere Enden 116 aufweisen. Der vordere untere Träger 118 bietet eine nach oben weisende Stützfläche 122 dar. Die betreffenden Träger und Glieder sind durch Knotenbleche 102 und 110 ausgesteift. An dem etwa mittleren Träger 94 sind über Halterungen 130 zwei im gegenseitigen Abstand angeordnete, einen quer zur Fahrtrichtung verlaufenden Schlitz 132 begrenzende Trägerteile 126, 128 befestigt.

Die Verbindungsglieder 44, 48 des Hauptrahmens 20 und die entsprechenden Verbindungsglieder 104 und 108 des Verlängerungsrahmens 22 weisen im Abstand liegende Befestigungsbohrungen 140 bzw. 142 auf, durch die Befestigungsbolzen 138 im Bereich der Stirnenden 80 und 90 von Hauptrahmen und Verlängerungsrahmen zum starren Verbinden der beiden Rahmen gesteckt werden können. Dem gleichen Zweck dienen auch die Bohrungen 144 bzw. 146 an den Halterungen 130 bzw. 70 von Verlängerungsrahmen 22 und Hauptrahmen 20.

Die Verlängerungsrahmen 22 können unterschiedliche Länge zur Anpassung an unterschiedliche Gesamtbreiten des Erntekopfes aufweisen.

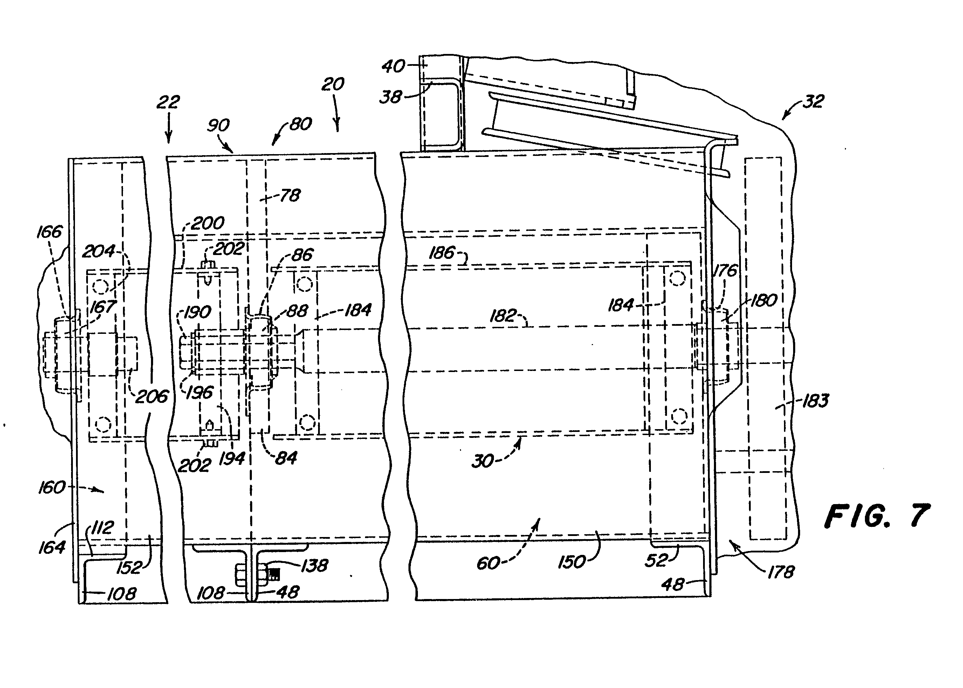

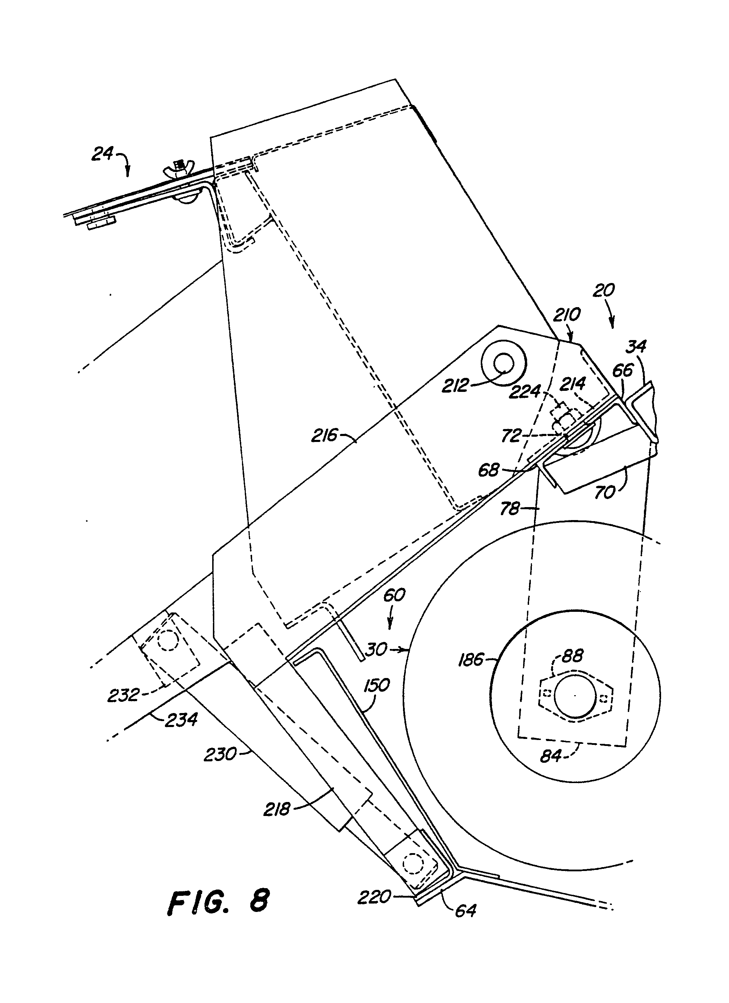

Hauptrahmen 20 und Verlängerungsrahmen 22 werden durch übliche Verkleidungsbleche 150 bzw. 152 zur Vervollständigung des Erntegutsammeltroges 60 bzw. 160 angebracht. Das freie Stirnende 162 des Verlängerungsrahmens wird durch ein Stirnverkleidungsblech 164 nach Fig. 6 verkleidet, das entsprechende Befestigungslöcher 168, 170 sowie eine Öffnung 166 für ein sich selbst ausrichtendes Lager 167 für die Verlängerung der Förderschnecke 30 aufweist. Der Trog mit Förderschnecke ist am Besten aus den Fig. 7 und 8 zu ersehen. Der Hauptrahmen 20 weist in der Stirnwand 178 eine Öffnung 176 für ein sich selbst ausrichtendes Lager 180 zur Aufnahme einer Hauptwelle 182 auf, die an ihrem anderen Ende durch das Lager 88 in der Öffnung 86 abgestützt ist. In Fig. 7 trägt das rechte Ende der Hauptwelle 182 eine Antriebsscheibe 183. Das Schneckenrohr 186 wird über die mit der Hauptwelle 182 verbundenen Scheiben in Drehrichtung mitgenommen. Die Schneckenflügel sind mit 188 bezeichnet. Das linke Ende 190 der Hauptwelle 182 ragt in Fig. 7 in den Verlängerungsrahmen 22 hinein und ist mit dem Zylinder 200 der Verlängerungsschnecke über die Mitnehmerscheibe 194 und den Schnappring 196 drehmomentmäßig gekuppelt, wobei die Scheibe mit dem Zylinder 200 über Schrauben 202 verbunden ist. Der Zylinder 200 weist an seinem außenliegenden Ende eine weitere Mitnehmerscheibe 204 auf, die mit einem Wellenstummel 206 verbunden ist, der in dem Außenlager 167 drehbar abgestützt ist.

Gemäß Fig. 8 ist jede Reihenernteeinheit 24 auf dem Erntekopf mittels einer Haltevorrichtung 210 einstellbar und schwenkbar abgestützt. Zu diesem Zweck weist die Reihenernteeinheit 24 an ihrem hinteren oberen Ende eine erste horizontale Querachse 212 auf und ist im Abstand von dieser Querachse durch einen an der Haltevorrichtung 210 schwenkbar abgestützten Hubzylinder 230 schwenkbar abgestützt.

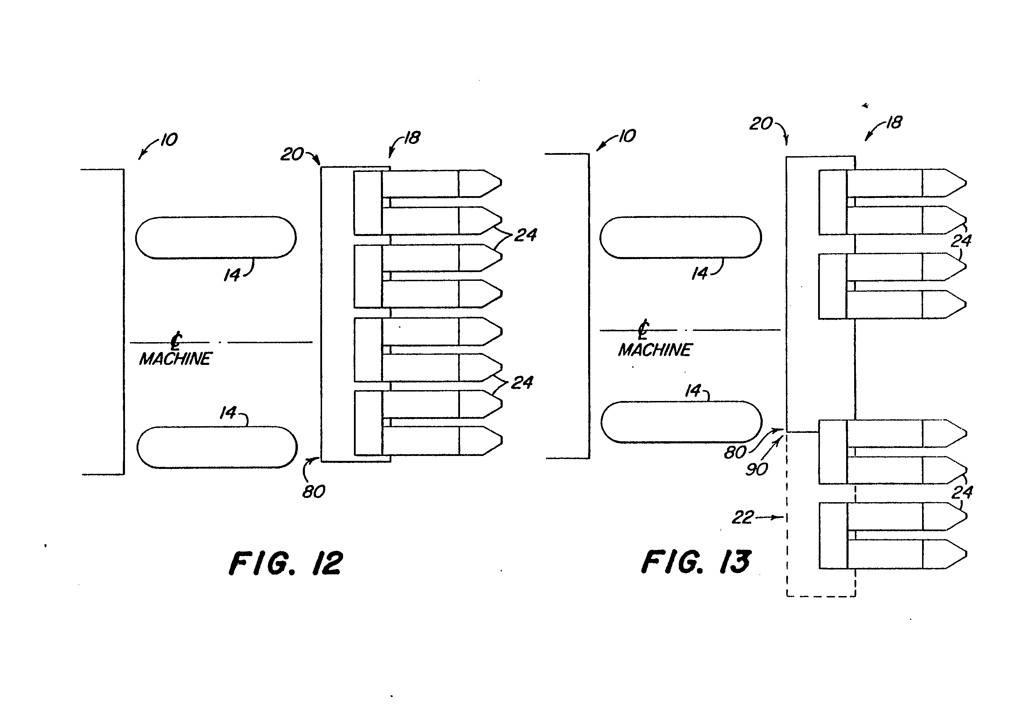

Die Haltevorrichtung weist gemäß Fig. 8 und Fig. 11 einen oberen Teil in Form eines flachen Verbindungsabschnittes 214 auf, der auf den beiden zwischen sich einen Führungsschlitz bildenden Trägerteilen 66, 68 des Hauptrahmens 20 bzw. 126, 128 des Verlängerungsrahmens 22 abgestützt ist und Bohrungen 226 für die in dem Schlitz 72 bzw. 132 geführten Führungs- und Feststellelemente 224 aufweist. An den Enden des Teils 214 sind Seitenteile 216 befestigt, die im Abstand von dem Teil 214 durch den unteren Teil der Haltevorrichtung 210 starr miteinander verbunden sind. Der untere Teil der Haltevorrichtung 210 besteht aus zwei von den Seitenteilen 216 nach unten konvergierenden Streben 218, deren unteren Enden durch ein Winkeleisen fest miteinander verbunden sind. An dem Winkeleisen sind im Abstand zwei Laschen 222 befestigt, die zur Aufnahme einer unteren Schwenkachse für das untere Ende des Hubzylinders 230 dienen. Aus Fig. 8 ist ersichtlich, daß sich das Winkeleisen 220 an einem dem vorderen unteren Träger 58 des Hauptrahmens 20 bzw. 118 des Verlängerungsrahmens 22 entsprechenden Träger 64 seitlich frei verschieblich abstützt, ohne daß in der Arbeitsstellung das Winkeleisen 220 an diesem Träger festgelegt ist. Das obere Ende des Hubzylinders 230 ist an der Reihenernteeinheit an einem Teil 234 bei 232 schwenkbar befestigt.

Durch einfaches Lockern der Schraubbolzen 224 wird die feste Verbindung zwischen der Haltevorrichtung 210 und dem Erntekopf gelockert, so daß die Reihenernteeinheit mit der Haltevorrichtung 210 auf den Trägern in die gewünschte Arbeitsstellung seitlich verschoben und genau eingestellt und in der neuen Stellung durch Festziehen der Schraubbolzen festgelegt werden kann. Dabei wird die Haltevorrichtung durch den Führungsschlitz und die Führungs- und Feststellelemente in Form der Schraubbolzen 224 zuverlässig an den Trägern geführt und gegen vollständiges Lösen gesichert.

Bei der abgewandelten Ausführungsform nach Fig. 9 und 10 besteht die Haltevorrichtung aus zwei getrennten Gleitschuhen 240 und 250. Der obere Gleitschuh 240 ist U-förmig ausgebildet und mit seinem Verbindungssteg 242 auf den den Führungsschlitz bildenden Trägerteilen, z. B. den Trägerteilen 66, 68 des Hauptrahmens 20 abgestützt. Die seitlichen Schenkel 244 tragen in Fluchtung stehende Schwenkzapfen 246, welche die erste horizontale Querachse zur schwenkbaren Lagerung der Reihenernteeinheit 24 bilden. Der obere Gleitschuh 240 kann mit den Führungs- und Feststellelementen 248, die in dem Führungsschlitz gleiten, in jeder gewünschten Stellung an den Trägerteilen 66, 68 festgelegt werden. Mit 232 und 234 sind in Fig. 9 Teile der Reihenernteeinheit 24 bezeichnet, an denen das obere Ende des Hubzylinders 230 angelenkt ist.

Der untere Gleitschuh 250 weist einen im Querschnitt winkelförmigen Schuhabschnitt 252 auf, dessen oberer Schenkel 254 sich auf der Stützfläche 62 des vorderen unteren Trägers 58 abstützt und dessen unterer Schenkel 258 die vordere Fläche dieses Trägers 58 übergreift. Beide Schenkel weisen abgewinkelte Stege 260 auf, um ein Abheben des unteren Schuhs vom dem Träger 58 zu verhindern. Der Schuhabschnitt 252 ist frei auf dem Träger 58 verschiebbar. Von seinem oberen Schenkel 254 springen senkrecht zur Stützfläche 62 Winkelstücke 261 auf, welche in Fluchtung liegende Bohrungen 262 für die zweite horizontale Querachse 264 aufweisen, um die das untere Ende des Hubzylinders 230 schwenkbar ist.

Lediglich durch Lockerung der Führungs- und Feststellelemente 248 des oberen Schuhes der Haltevorrichtung wird die Möglichkeit geschaffen die Reihenernteeinheit mit dem oberen und dem unteren Gleitschuh als Einheit auf den Trägern seitlich zu verschieben und in jede gewünschte Stellung stufenlos auszurichten, ohne daß die Gefahr einer Verklemmung oder Verkantung besteht. Nach Ausrichtung der Reihenernteeinheit kann diese auf den Trägern durch Festziehen der Führungs- und Feststellelemente 248 wieder festgelegt werden.

Figur 12 zeigt den Erntekopf bei Verwendung nur des Hauptrahmens 20 mit vier Reihenerntemaschinen. In dieser Stellung befindet sich die Maschine auch bei Versand oder in der Transportstellung. Für den Betrieb kann an den Hauptrahmen 20 ein Verlängerungsrahmen 22 nach Fig. 13 angesetzt werden und können die Reihenernteeinheiten über die Gesamtbreite des zusammengesetzten Rahmens entsprechend den jeweiligen Erntegutreihen eingestellt werden, wie dies Fig. 13 zeigt.

**Patentansprüche**

1. Erntekopf für Erntemaschinen zum Ernten von in Reihen unterschiedlichen Abstandes stehenden Erntegutes, mit einem, insb. selbstfahrenden Maschinenteil (10), an dessen Fahrgestell (12) der Erntekopf (18) befestigbar ist, der einen quer zur Fahrtrichtung langgestreckten Hauptrahmen (20) und wenigstens einen mit diesem verbindbaren Verlängerungsrahmen (22) aufweist, wobei der Hauptrahmen und die Verlängerungsrahmen mehrere, jeweils in Fluchtung stehende, in Richtung der Rahmen (20, 22) langgestreckte, in Fahrtrichtung und in der Höhe gegeneinander versetzte und zueinander parallele Träger (36, 94 ; 66, 126 ; 68, 128 ; 58, 118) umfassen, die einem eine Förderschnecke (30) enthaltenden Erntegutsammeltrog (60) zugeordnet sind, wobei der Erntekopf (18) mehrere, in ihren gegenseitigen Abständen einstellbare, in Fahrtrichtung langgestreckte Reihenernteeinheiten (24) aufweist, von denen wenigstens eine, die individuell mittels eines Hubzylinders (230) um eine erste horizontale Querachse (112) schwenkbar ist, in einer Haltevorrichtung (210 ; 240, 250) gestützt ist, in derem oberen Teil (216, 240) die erste horizontale Querachse (212) gelagert ist und in derem unteren Teil (220, 250) der Hubzylinder (230) um eine zweite horizontale Querachse (264) schwenkbar abgestützt ist, wobei der obere und der untere Teil der Haltevorrichtung (210 ; 240, 250) auf je einem (68, 118 ; 58, 94) der parallelen Träger seitlich frei verschieblich unterstützt sind und die Haltevorrichtung (210 ; 240, 250) in ihrer Arbeitsstellung durch Führungs- und Feststellelemente (224 ; 248) festlegbar ist, dadurch gekennzeichnet, daß der eine, den oberen Teil (216 ; 240) der Haltevorrichtung (210 ; 240, 250) abstützende Träger (68 ; 118) des Hauptrahmens (20) und des Verlängerungsrahmens (22) zwei Trägerteile (66, 68 ; 126, 128) aufweist, die zwischen sich einen über die Gesamtlänge von Haupt- und Verlängerungsrahmen durchgehenden Führungsschlitz (132) bilden, welcher ausschließlich die an der Haltevorrichtung (210 ; 240, 250) angeordneten Führungs- und Feststellelemente (224 ; 248) frei verschieblich und unverlierbar aufnimmt, und daß der untere Teil (220, 250) der Haltevorrichtung (210 ; 240, 250) so auf dem entsprechenden parallelen Träger (58, 94) abgestützt ist, daß er in ständiger Fluchtung mit der Längsrichtung des Hubzylinders steht.

2. Erntekopf nach Anspruch 1, dadurch gekennzeichnet, daß der obere Teil (240) und der untere Teil (250) der Haltevorrichtung (240, 250) aus zwei getrennten Gleitschuhen bestehen, von denen der obere (240) die alleinige Führungs- und Feststellelemente (248) trägt, während der untere Gleitschuh (250) das senkrecht zu einer ebenen Stützfläche (62) des zugehörigen Trägers (58, 94) aufragende Schwenklager (261) für die Querachse (264) am unteren Ende des Hubzylinders (230) aufweist.

**Claims**

1. A harvesting head for harvesters for harvesting crop material in rows at different spacings, with a machine portion (10) which in particular is self-propelled and to the chassis (12) of which the harvesting head (18) can be fixed, which harvesting head has a main frame (20) which is elongate transversely with respect to the direction of travel and at least one extension frame (22) which can be connected to the main frame, wherein the main frame and the extension frames include a plurality of bearers (36, 94 ; 66, 126 ; 68, 128 ; 58, 118) which are respectively in alignment, are elongate in the direction of the frames (20, 22), are displaced relative to each other in the direction of travel and in respect of height, are parallel to each other, and are associated with a crop material collecting trough (60) which contains a conveying screw (30), wherein the harvesting head (18) has a plurality of row harvesting units (24) which are adjustable in their spacings from each other and which are elongate in the direction of travel and of which at least one which is pivotable individually by means of a lifting cylinder (230) about a first horizontal transverse axis (112) is supported in a holding means (210 ; 240, 250) in the upper part (216, 240) of which the first horizontal transverse axis (212) is mounted and in the lower part (220, 250) of which the lifting cylinder (230) is supported pivotably about a second horizontal transverse axis (264), wherein the upper and lower parts of the holding means (210 ; 240, 250) are laterally freely displaceably supported on respective ones (68, 118 ; 58, 94) of the parallel bearers and the holding means (210 ; 240, 250) can be fixed in its operating position by guide and fixing elements (224 ; 248), characterised in that the one bearer (68 ; 118), which supports the upper part (216 ; 240) of the holding means (210 ; 240, 250), of the main frame (20) and the extension frame (22) has two bearer portions (66, 68 ; 126, 128) which form between them a guide slot (132) which is continuous over the entire length of the main and extension frames and which freely displaceably and non-losably carries exclusively the guide and fixing elements (242 ; 248) which are disposed on the holding means (210 ; 240, 250) and that the lower part (220, 250) of the holding means (210 ; 240, 250) is so supported on the corresponding parallel bearer (58, 94) that it is in continuous alignment with the longitudinal direction of the lifting cylinder.

2. A harvesting head according to claim 1 characterised in that the upper part (240) and the lower part (250) of the holding means (240, 250) comprise two separate slide shoes of which the upper (240) carries the sole guide and fixing elements (248) while the lower slide shoe (250) has the pivot mounting (261) for the transverse axis (264) at the lower end of the lifting cylinder (230), said pivot mounting (261) standing up normal to a flat support surface (62) of the associated bearer (58, 94).

## Revendications

1. Ensemble de récolte pour machines destinées à la récolte de cultures en lignes avec écartement variable entre les rangs, comportant un corps de machine (10), en particulier automoteur, sur le châssis (12) duquel l'ensemble de récolte (18) peut être fixé, cet ensemble comportant un châssis principal (20) de forme allongée s'étendant transversalement à la direction de marche et au moins un châssis formant allonge (22) pouvant être relié au précédent, le châssis principal et le châssis formant allonge comportant plusieurs supports (36, 94 ; 66, 126 ; 68, 128 ; 58, 118) chaque fois alignés, de forme allongée dans la direction des châssis (20, 22), décalés dans la direction de marche et dans le sens de la hauteur et parallèles entre eux, ces supports étant conjugués à une gouttière collectrice (60) contenant une vis transporteuse (30), l'ensemble de récolte (18) comprenant plusieurs becs de récolte de rang (24) de forme allongée dans la direction de marche et réglables en ce qui concerne leur écartement relatif, parmi lesquels au moins un, qui peut être déplacé par pivotement de façon individuelle autour d'un premier axe transversal horizontal (212) au moyen d'un vérin de relevage (230), prend appui dans un dispositif de maintien (210 ; 240, 250) dans la partie supérieure (216, 240) duquel le premier axe transversal horizontal (212) est monté et dans la partie inférieure (220, 250) duquel le vérin de relevage (230) prend appui de façon à pouvoir pivoter autour d'un second axe transversal horizontal (264), les parties supérieure et inférieure du dispositif de maintien (210 ; 240, 250) étant soutenues chaque fois sur l'un (68, 118 ; 58, 94) des supports parallèles d'une manière permettant leur libre coulissement latéral et le dispositif de maintien (210 ; 240, 250) pouvant être immobilisé dans sa position de travail par des éléments de guidage et d'immobilisation (224 ; 248), caractérisé en ce que l'un des supports (68 ; 118) du châssis principal (20) et du châssis formant allonge (22) soutenant la partie supérieure (216 ; 240) du dispositif de maintien (210 ; 240, 250) comporte deux parties de support (66, 68 ; 126, 128) qui ménagent entre elles une fente de guidage (132) s'étendant sur toute la longueur des châssis principaux et formant allonge, cette fente recevant exclusivement les éléments de guidage et d'immobilisation (224 ; 248) disposés sur le dispositif de maintien (210 ; 240, 250) d'une manière permettant leur libre coulissement et s'opposant à leur perte, et en ce que la partie inférieure (220, 250) du dispositif de maintien (210 ; 240, 250) prend appui sur les supports parallèles correspondants (58, 94) de façon telle qu'elle se trouve constamment alignée avec la fraction longitudinale du vérin de relevage.

2. Ensemble de récolte suivant la revendication 1, caractérisé en ce que la partie supérieure (240) et la partie inférieure (250) du dispositif de maintien (240, 250) sont constituées par deux patins séparés parmi lesquels le patin supérieur (240) porte seulement les éléments de guidage et d'immobilisation (248), tandis que le patin inférieur (250) comporte le palier de pivotement (261) faisant saillie perpendiculairement à une surface d'appui plane (62) du support conjugué (58, 94) et destiné à l'axe transversal (264) disposé à l'extrémité inférieure du vérin de relevage (230).

FIG. 1

FIG. 11

FIG. 9

FIG. 10

1

0 066 237

FIG. 2

FIG. 6

FIG. 3

**FIG. 4**

**FIG. 5**

FIG. 7

FIG. 8

FIG. 12

FIG. 13